(19) Europäisches Patentamt / European Patent Office / Office européen des brevets

(11) **EP 4 568 211 B1**

(12) **EUROPEAN PATENT SPECIFICATION**

(45) Date of publication and mention
of the grant of the patent:
**04.02.2026 Bulletin 2026/06**

(21) Application number: **23214008.7**

(22) Date of filing: **04.12.2023**

(51) International Patent Classification (IPC):
*H04L 41/0823* (2022.01) *H04L 41/16* (2022.01)
*H04L 41/0894* (2022.01) *G06N 3/092* (2023.01)
*H04W 24/02* (2009.01) *H04W 28/18* (2009.01)
*G06N 20/00* (2019.01)

(52) Cooperative Patent Classification (CPC):
**H04L 41/16; G06N 3/092; G06N 20/00;**
**H04L 41/0823; H04L 41/0894; H04W 24/02**

(54) **METHOD FOR PROVIDING COMMUNICATION SERVICES, ESPECIALLY FOR MODIFYING NETWORK BEHAVIOR AND/OR FOR OPTIMIZING NETWORK PERFORMANCE**

VERFAHREN ZUR BEREITSTELLUNG VON KOMMUNIKATIONSDIENSTEN, INSBESONDERE ZUR NETZVERHALTENS- UND/ODER DIENSTGÜTEOPTIMIERUNG

PROCÉDÉ POUR LA MODIFICATION DU COMPORTEMENT D'UN RÉSEAU ET/OU POUR L'OPTIMISATION DU FONCTIONNEMENT D'UN RÉSEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.06.2025 Bulletin 2025/24**

(73) Proprietor: **Deutsche Telekom AG**
**53113 Bonn (DE)**

(72) Inventor: **COLOM IKUNO, Josep**
**2100 Korneuburg (AT)**

(74) Representative: **Schwöbel, Thilo K. et al**
**Kutzenberger Wolff & Partner**
**Waidmarkt 11**
**50676 Köln (DE)**

(56) References cited:
**WO-A1-2023/086937** **WO-A1-2023/148010**
**WO-A1-2023/209577**

• **MOHAMMAD ALAWIEH ET AL: "General aspects of AI/ML framework", vol. 3GPP RAN 1, no. Athens, GR; 20230227 - 20230303, 17 February 2023 (2023-02-17), XP052248278, Retrieved from the Internet <URL:https://www.3gpp.org/ftp/ TSG_RAN/WG1_RL1/TSGR1_112/Docs/ R1-2301139.zip R1-2301139.docx> [retrieved on 20230217]**

**Description**

BACKGROUND

The present invention relates a method for providing communication services for modifying network behavior and/or for optimizing network performance and/or quality-of-service within a mobile communication network, wherein the mobile communication network comprises, or is assigned to or associated with, an access network and wherein the mobile communication network comprises, or is assigned to or associated with, a core network, wherein furthermore a plurality of user equipments are connected, or able to be connected, to the mobile communication network,

> wherein the access network as well as the core network comprise a plurality of network elements and wherein furthermore the user equipments likewise comprise or are considered as network elements,
> wherein in order to provide communication services, a plurality of network elements are required to interact with each other, and wherein, in view of such interaction between a first network element and a second network element, a machine-learning approach is used, the machine-learning generally comprising, or using, policy data, wherein, based on pieces of state information as well as based on the policy data, a machine-learning output is able to be computed that allows to derive one or a plurality of actions or action items.

Furthermore, the present invention relates to a system or to a mobile communication network for providing communication services for modifying network behavior and/or for optimizing network performance and/or quality-of-service within a mobile communication network, wherein the mobile communication network comprises, or is assigned to or associated with, an access network and wherein the mobile communication network comprises, or is assigned to or associated with, a core network, wherein furthermore a plurality of user equipments are connected, or able to be connected, to the mobile communication network,

> wherein the access network as well as the core network comprise a plurality of network elements and wherein furthermore the user equipments likewise comprise or are considered as network elements,
> wherein in order to provide communication services, a plurality of network elements are required to interact with each other, and wherein, in view of such interaction between a first network element and a second network element, a machine-learning approach is used, the machine-learning generally comprising, or using, policy data, wherein, based on pieces of state information as well as based on the policy data, a machine-learning output is able to be computed that allows to derive one or a plurality of actions or action items.

Furthermore, the present invention relates to a user equipment for being provided with communication services, wherein - for modifying network behavior and/or for optimizing network performance and/or quality-of-service within a mobile communication network that comprises, or is assigned to or associated with, an access network and a core network - the user equipment, as a second network element, is configured to communicate with a first network element, especially a base station entity of the access network and/or a network function or service of the core network, such that in order for the user equipment to be provided with communication services, a machine-learning approach is used, the machine-learning generally comprising, or using, policy data, wherein, based on pieces of state information as well as based on the policy data, a machine-learning output is able to be computed that allows to derive one or a plurality of actions or action items.

Furthermore, the present invention relates to a program and to a computer-readable medium for providing communication services, especially for modifying network behavior and/or for optimizing network performance and/or quality-of-service within a mobile communication network according to the inventive method.

The present invention relates to the area of mobile communication networks. Conventionally known mobile communication networks typically comprise (or are, at least, assigned to or related to) a core network, or core network components, as well as a (radio) access network, wherein the (radio) access network typically comprises a plurality of base station entities.

Artificial intelligence and especially machine-learning are currently being investigated as possible ways with which the performance of mobile communication networks can be enhanced.

While several types of machine-learning exist, one method shows promises in the highly dynamic and quickly changing (physical) environment in which mobile communication networks and mobile communications have to work; this machine-learning method is typically called reinforcement learning.

Previously, AI/ML model monitoring and lifecycle management processes within 3GPP RAN1 studies were presented and discussed in the 3GPP Draft R1-2301139. Although the use of model identifiers in model lifecycle procedures and the management of multiple models for the same functionality is mentioned, only a unidirectional transmission of model identifiers is presented.

Also, in document WO 2023/209577 A1 the management of model identifiers and versioning within distributed AI/ML systems was discussed concerning the assignment of short and long model IDs to identify machine-learning models and the reporting of active model version and ID from UEs to the network during federated or transfer learning operations. However, the reported model ID and versioning information is only used for model registration, compatibility checking or model update coordination.

Furthermore, in document WO 2023/148010 A1 lifecycle management (LCM) of AI/ML models deployed in UEs, including transmission of various model-related messages and identifiers from the network to the UE, was presented. However, only a unidirectional transmission of model identifiers was presented.

Moreover, in document WO 2023/086937 A1 the iterative improvement and utilization of updated policies based on results returned from a UE (e.g., federated learning steps) was presented. However, the described feedback loop assumes a single policy or model being active per UE at any given time.

However, in mobile communication networks, the feedback structure of procedures in mobile networks is not adequate for a broad application of reinforcement learning, especially the feedback of the $\bar{s}$ state vector so that the optimum new action $\Pi(\bar{s})$ can be calculated.

SUMMARY

An object of the present invention is to provide an effective and simple approach for providing communication services, especially for modifying network behavior and/or for optimizing network performance and/or quality-of-service within a mobile communication network that relies on machine-learning, especially reinforcement learning. A further object of the present invention is to provide a corresponding system or mobile communication network, a corresponding user equipment, and a corresponding program and computer-readable medium.

The object of the present invention is achieved by a method for providing communication services for modifying network behavior and/or for optimizing network performance and/or quality-of-service within a mobile communication network, wherein the mobile communication network comprises, or is assigned to or associated with, an access network and wherein the mobile communication network comprises, or is assigned to or associated with, a core network, wherein furthermore a plurality of user equipments are connected, or able to be connected, to the mobile communication network,

> wherein the access network as well as the core network comprise a plurality of network elements and wherein furthermore the user equipments likewise comprise or are considered as network elements,
> wherein in order to provide communication services, a plurality of network elements are required to interact with each other, and wherein, in view of such interaction between a first network element and a second network element, a machine-learning approach is used, the machine-learning generally comprising, or using, policy data, wherein, based on pieces of state information as well as based on the policy data, a machine-learning output is able to be computed that allows to derive one or a plurality of actions or action items, characterized in that the method comprises the following steps:

> -- in a first step, the first network element transmits, to the second network element, policy data together with a policy data identifier information,
> -- in a second step, the second network element generates pieces of state information and computes, based on the pieces of state information as well as based on the policy data, a machine-learning output, wherein the second network element furthermore transmits the machine-learning output and the policy data identifier information to the first network element,
> -- in a third step, the first network element generates or derives, based on the machine-learning output, one or a plurality of actions or action items, and transmits the one or the plurality of actions or action items to the second network element.

It is thereby advantageously possible, according to the present invention, that a transmission, to the second network element (or user equipment), of model data ($\Pi$) - or, of policy data - is possible. Furthermore, it is advantageously possible to transmit a partial status vector $\bar{s}'$ to the second network element (or user equipment) and realize model inference in the second network element (or user equipment), such that a solution is able to be provided to be realized with an increased level of privacy preservation of certain state information (of, or generated (or measured) by, the second network element (or user equipment)), such as by not including personally-identifiable, subscriber-related information (e.g. international mobile subscriber identity, SUPI; subscription permanent identifier, SUPI; internet protocol, IP, address), (precise) location-related and/or other privacy-sensitive information in the partial status vector $\bar{s}'$. It is furthermore advantageously possible, according to the present invention, to provide a solution of how the (transformed) state data - being sent by the second network element (or user equipment) - can be associated to a specific machine-learning model, such that it is possible to simultaneously realize model inference with multiple models, whereas each model can be input different state date.

According to the present invention, it is advantageously possible and preferred that the transmission of the policy data and/or the transmission of the policy data identifier information corresponds

> -- to an initial transmission of the policy data and/or the transmission of the policy data identifier information and/or
-- to a transmission of an updated policy data and/or the transmission of an updated policy data identifier information,

wherein especially, the transmission of an updated policy data and/or the transmission of an updated policy data identifier information occurs repeatedly, wherein especially the updated policy data correspond to policy data having been subjected to a re-training operation.

According to the present invention, it is thereby advantageously possible that the inventive method is able to be performed in a flexible and efficient manner.

According to the present invention, it is furthermore advantageously possible and preferred that,

-- as part of the first step, the first network element furthermore transmits, to the second network element, further pieces of state information, and wherein,
-- as part of the second step, the second network element computes the machine-learning output - besides based on the pieces of state information and the policy data - also based on the further pieces of state information.

According to the present invention, it is thereby advantageously possible that the inventive method is able to be performed in a flexible and efficient manner.

According to the present invention, it is furthermore advantageously possible and preferred that

-- as part of the second step, besides the second network element computing the machine-learning output based on the pieces of state information as well as based on the policy data, the second network element generates additional pieces of state information and transmits - besides the machine-learning output and the policy data identifier information - also the additional pieces of state information to the first network element, and wherein,
-- as part of the third step, the first network element computes, based on the additional pieces of state information as well as based on the policy data as well as on the machine-learning output a further machine-learning output, wherein first network element furthermore generates or derives the one or the plurality of actions or action items - besides based on the machine-learning output - also based on the further machine-learning output.

According to the present invention, it is thereby advantageously possible that the inventive method is able to be performed in a flexible and efficient manner.

According to the present invention, it is furthermore advantageously possible and preferred that the first and the second network elements correspond to one out of the following:

-- the first network element corresponds to a network node or an entity or functionality of the (radio) access network, especially a base station entity, and the second network element corresponds to a user equipment,
-- the first network element corresponds to a network node or an entity or functionality of the core network, especially a network function or service such as an access and mobility management function, and the second network element corresponds to a user equipment,
-- the first network element corresponds to first user equipment, and the second network element corresponds to a second user equipment,
-- the first network element corresponds to a network node or an entity or functionality of the (radio) access network, especially a base station entity and/or a centralized unit and/or a radio unit and/or a distributed unit, and the second network element corresponds to a further network node or a further entity or functionality of the (radio) access network, especially a base station entity and/or a centralized unit and/or a radio unit and/or a distributed unit,
-- the first network element corresponds to a network node or an entity or functionality of the core network, especially a network function or service such as a session management function, and the second network element corresponds to a further network node or a further entity or functionality of the core network, especially a network function or service such as a user plane function, network data analytics function or a policy and charging function.

According to the present invention, it is thereby advantageously possible that the inventive method is able to be performed in a flexible and efficient manner.

According to the present invention, it is furthermore advantageously possible and preferred that

-- in a fourth step, the second network element generates second pieces of state information based on the application of the one or the plurality of actions or action items,
-- in a fifth step, the second network element sends the second pieces of state information to the first element including the policy data identifier information,
-- in a sixth step, the first element uses the second pieces of state information to provide updated policy data, in an iterated or repeated first step, to the second network element, especially together with an updated policy data identifier information,

wherein, especially, the first to fifth steps occur repeatedly such that the transmission of the updated policy data and/or the transmission of the updated policy data identifier information are repeated, wherein especially, the updated policy data correspond to policy data having been subjected to a re-training operation, wherein especially such re-training operation is based - in addition to the second pieces of state information received from the second network element - also on corresponding second pieces of state information received from further network elements being, or corresponding to, second network elements.

According to the present invention, it is thereby advantageously possible that the inventive method is able to be performed in a flexible and efficient manner.

According to the present invention, it is furthermore advantageously possible and preferred that the policy data is, refers, comprises or contains a machine-learning model, especially a machine-learning model based on reinforcement learning, especially comprising, containing or being a set of weights, especially as part of a neural network, associated to be fully or partially derived from the updated policy data, especially by means of training of the policy data using the updated policy data as input.

According to the present invention, it is thereby advantageously possible that the inventive method is able to be performed in a flexible and efficient manner.

According to the present invention, it is furthermore advantageously possible and preferred that the policy data identifier information includes a versioning information, wherein especially, by means of the versioning information, the policy data identifier information is able to refer to a specific version of a plurality of versions of the policy data, especially a machine-learning model, wherein especially the policy data identifier information and/or the versioning information is based on a hash identifier and/or on a timestamp.

It is furthermore advantageously possible and preferred that after a specific re-training operation, the first network element generates versioning information that refers or is associated to the specific re-training operation.

It is furthermore advantageously possible and preferred that information transmitted in the second step can be associated to a policy data including the specific re-training operation, such that information transmitted in the second step based on an specific (e.g. outdated) specific policy data version can be excluded from re-training.

According to the present invention, it is thereby advantageously possible that the inventive method is able to be performed in a flexible and efficient manner.

Furthermore, the present invention relates to a system or to a mobile communication network for providing communication services for modifying network behavior and/or for optimizing network performance and/or quality-of-service within a mobile communication network, wherein the mobile communication network comprises, or is assigned to or associated with, an access network and wherein the mobile communication network comprises, or is assigned to or associated with, a core network, wherein furthermore a plurality of user equipments are connected, or able to be connected, to the mobile communication network,

wherein the access network as well as the core network comprise a plurality of network elements and wherein furthermore the user equipments likewise comprise or are considered as network elements,

wherein in order to provide communication services, a plurality of network elements are required to interact with each other, and wherein, in view of such interaction between a first network element and a second network element, a machine-learning approach is used, the machine-learning generally comprising, or using, policy data, wherein, based on pieces of state information as well as based on the policy data, a machine-learning output is able to be computed that allows to derive one or a plurality of actions or action items, characterized in that the system or mobile communication network is configured such that :

-- the first network element transmits, to the second network element, policy data together with a policy data identifier information,
-- the second network element generates pieces of state information and computes, based on the pieces of state information as well as based on the policy data, a machine-learning output, wherein the second network element furthermore transmits the machine-learning output and the policy data identifier information to the first network element,
-- the first network element generates or derives, based on the machine-learning output, one or a plurality of actions or action items, and transmits the one or the plurality of actions or action items to the second network element.

Furthermore, the present invention relates to a user equipment for being provided with communication services, wherein - for modifying network behavior and/or for optimizing network performance and/or quality-of-service within a mobile communication network that comprises, or is assigned to or associated with, an access network and a core network - the user equipment, as a second network element, is configured to communicate with a first network element, especially a base station entity of the access network and/or a network function or service of the core network, such that in order for the user equipment to be provided with communication services, a machine-learning approach is used, the machine-learning generally comprising, or using, policy data, wherein, based on pieces of state information as well as based on the policy data, a machine-learning output is able to be computed that allows to derive one or a plurality of actions or action items, characterized in that the user equipment, as the second network element, is furthermore configured such that:

-- the second network element receives policy data together with a policy data identifier information,
-- the second network element generates pieces of state information and computes, based on the pieces of state information as well as based on the policy data, a machine-learning output, wherein the second network element furthermore transmits the machine-learning output and the policy data identifier information to the first network element,
-- the second network element receives, from the first network element, one or a plurality of actions or action items, that is/are especially based on the machine-learning output.

Additionally, the present invention relates to a program comprising a computer readable program code which, when executed on a computer and/or on a network node of a mobile communication network and/or on a user equipment, or in part on a network node of a mobile communication network and in part on a user equipment, causes the computer and/or the network node of the mobile communication network and/or the user equipment to perform the inventive method.

Still additionally, the present invention relates to a computer-readable medium comprising instructions which, when executed on a computer and/or on a network node of a mobile communication network and/or on a user equipment, or in part on a network node of a mobile communication network and in part on a user equipment, causes the computer and/or the network node of the mobile communication network and/or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

BRIEF DESCRIPTION OF THE DRAWINGS

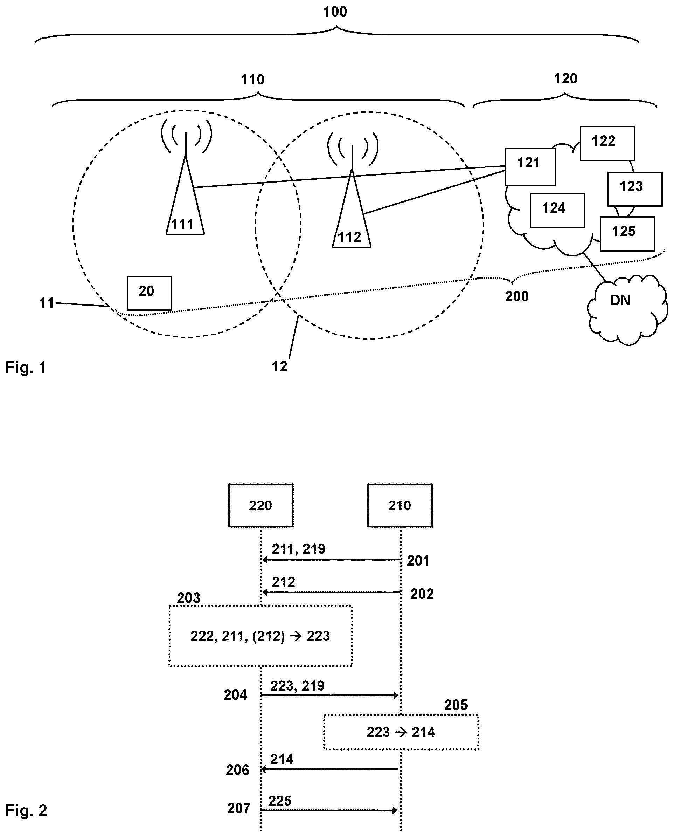

Figure 1 schematically illustrates a mobile communication network comprising an access network, a core network and a user equipment, wherein the core network typically comprises a number of network functions or services, and wherein the (radio) access network likewise comprises a number of base station entities providing radio coverage for specific geographical areas, respectively.

Figure 2 schematically illustrates the situation of a first network element (especially a network node of a mobile communication network, e.g. of the radio access network or of the core network) interacting with a second network element (especially a user equipment) in a manner such that - despite machine-learning methods applied - it is nevertheless possible to provide for an enhanced level of privacy by means of using, or applying privacy-keeping measures.

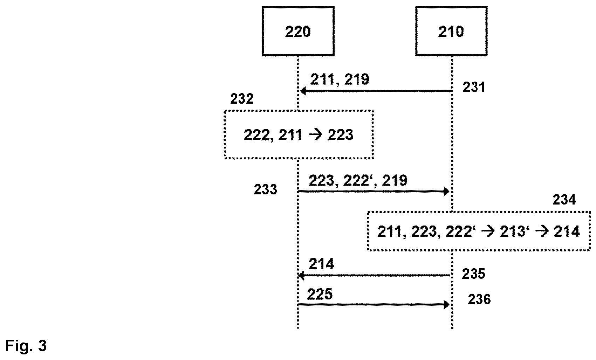

Figure 3 schematically likewise illustrates the situation of a first network element (especially a network node of a mobile communication network, e.g. of the radio access network or of the core network) interacting with a second network element (especially a user equipment) in a manner such that - despite machine-learning methods applied - it is nevertheless possible to provide for an enhanced level of privacy means of using, or applying privacy-keeping measures.

DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.
Where an indefinite or definite article is used when referring to a singular noun, e.g. "a", "an", "the", this includes a plural of that noun unless something else is specifically stated.
Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.
In Figure 1, a mobile communication network 100 comprising an access network 110, and a core network 120 is schematically shown. The mobile communication network 100 or also mobile communication network 100 is typically realized as a cellular network or cellular mobile communication network 100. The mobile communication network 100, especially the core network 120, typically comprises a number of network functions or services 121, 122, 123, 124. Examples of such network functions or services 121, 122, 123, 124 include, e.g., an access and mobility management function, AMF, and/or a session management function, SMF, and/or a policy and charging function, PCF, and/or a network data analytics function, NWDAF, and/or a user plane function, UPF - especially in case of a 5G mobile communication network, the core network 120 might also be called a 5G core (system) or a 5G system (5GS), and the access network 110 or radio access network 110 a next-generation radio access network, NG-RAN. The access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality, and are shown, in Figure 1, primarily as stationary base station entities 111, 112; however, the stationarity of the base station entities is not mandatory, i.e. the base station entities 111, 112, or at least part thereof, might also be realized as non-stationary base station entities or realize non-stationary base station entity functionality, where at least a part of such base station entity functionality (especially antenna entities or functionalities) might be located, e.g., aboard of non-terrestrial network infrastructure elements, such as satellites and/or high-altitude platforms. The mobile communication network 100 is typically connected to a plurality of user equipments 20 (or, rather, the user equipments 20 are connected to the mobile communication network 100), only one of which is schematically shown in Figure 1 for the sake of simplicity. Figure 1 additionally shows a data network DN being connected to the mobile communication network 100, wherein, typically, the user equipment 20 is able to be connected - using the mobile communication network 100 - to the data network DN.

Figure 1 primarily shows the simple situation that the user equipment 20 is connected to its home network 100, especially its home public land mobile network, i.e. the mobile communication network 100 represented in Figure 1 corresponds to the home network of the user equipment 20. However, the mobile communication network 100 (to which the user equipment 20 is connected, or, rather, to whose (radio) access network 120 the user equipment 20 is connected) might also correspond to a visited network or visited public land mobile network, and the home network or home public land mobile network of the user equipment 20 would, in this case, correspond to another mobile communication network connected to the mobile communication network 100, however, such other mobile communication network is not shown in Figure 1.

According to the present invention, the network nodes of the (radio) access network 110 (or the functionality of the (radio) access network 110) might be realized in a rather disaggregated manner (or disaggregated (radio) access network architecture), by means of a plurality of (radio) access network nodes that are able to interact in order to provide communication services to the user equipment 20 (or, rather, also to other user equipments not explicitly shown in Figure 1) being connected to or served by the mobile communication network 100.

As has already been said, both in conventionally known mobile communication networks as well as according to the present invention, machine-learning mechanisms are able to be used. One machine-learning mechanism or method is also called reinforcement learning.

However, applying machine-learning principles typically requires a certain number of measurements to be performed within the mobile communication network, or by components thereof or by user equipment linked or connected thereto. These measurements are able to provide data that can be used in the machine-learning process, especially a modification of network behavior and/or an optimization of network performance and/or quality-of-service.

In terms of measurements, the 5G system (5GS) already provides an extensive set of measurements that are available within the mobile communication network or to entities external to the core network. An overview related to measurements by the (radio) access network and/or the core network is provided by the respective 3GPP specifications (3GPP TS 28.552 (RAN layer 2 specification) and 3GPP TS 38.314 (SA5, i.e. management-related, specification). For example, the following list comprises a summary focusing on measurements from the (radio) access network nodes (such as gNB, or base station entities), user equipments (UE), access and mobility management function (AMF), session management function (SMF), user plane function (UPF), and policy and charging function (PCF). This excerpt especially covers the aspects related to radio link performance, registration and PDU session data transmission:

-- Measurements performed by the gNB:

-- Received Random Access Preambles
-- Packet delay
-- Number of active UEs in RRC_CONNECTED
-- Number of stored inactive UE contexts
-- Packet Loss Rate
-- PDSCH PRB Usage based on statistical MIMO (multiple input multiple output) layer in the DL per cell
-- PUSCH PRB Usage based on statistical MIMO layer in the UL per cell
-- Enhanced PDSCH PRB Usage for MIMO in the DL per cell
-- Enhanced PUSCH PRB Usage for MIMO in the UL per cell
-- Number of PDCP Packets in Split-DRB Scenario
-- Total RAN Delay in Split-DRB Scenario

-- Measurements performed by the user equipment:

-- Packet delay
-- UL PDCP Packet Average Delay per DRB per USER EQUIPMENT

-- UL PDCP Excess Packet Delay per DRB

-- Performance measurements reported by the gNB (this can either be based on user equipment or base station entity (gNB) measurements):

-- Packet Loss Rate
-- Packet Drop Rate
-- Packet delay
-- IP Latency measurements
-- UE Context Release
-- PDCP data volume measurements
-- Handovers measurements

-- Performance measurements for AMF:

-- Registered subscribers measurement
-- Mean number of registered subscribers
-- Maximum number of registered subscribers
-- Service Request procedure related measurements (e.g. network-initiated vs. UE-initiated, successful, unsuccessful, emergency service requests)
-- Related to registrations/deregistrations via trusted/untrusted non-3GPP access
-- Mobility-related measurements (e.g inter-AMF, 5G paging, 5GS to EPS and vice-versa)
-- Measurements related to SMS over non-access stratum
-- UE Configuration Update procedure related measurements
-- Authentication procedure related measurements

-- Performance measurements for SMF:

-- Session Management (e.g. number of PDU sessions, related requests, failures, modifications, release, roaming-related PDU sessions)
-- QoS flow monitoring
-- measurement for N4 interface (between SMF and UPF)

-- Performance measurements for UPF:

-- N3 interface related measurements (e.g. incoming/outgoing GTP packets, related data volumes, packet loss, packet delay, packet round trip time)
-- N6 related measurements (e.g. incoming/outgoing link usage)
-- N4 interface related measurements (e.g. session establishments, session reports)
-- N9 interface related measurements (e.g. round trip packet delay, data volume, delay, number of packets in UL/DL)
-- One way/round trip packet delay values/distribution between NG-RAN/UE and PSA UPF and vice-versa
-- QoS flow related measurements

-- Performance measurements for PCF:

-- AM policy association related measurements including authorization-related measurements
-- SM policy association related measurements including authorization-related measurements
-- UE policy association related measurements
-- Background data transfer policy control related measurements
-- Event exposure related measurements (e.g. subscription, unsubscription)

-- Common performance measurements for NFs:

-- Commonly related to Virtualized Resources (VRs) usage of the network function or service
-- Virtual CPU usage
-- Virtual memory usage
-- Virtual disk usage
-- Connection data volumes of NF

For example, the handover procedure (in 5G-NR, e.g. shown in 3GPP TS 38.300) is an example of a process that is currently performed in mobile communication networks (or 5G networks) that is able to be modified or optimized in view of optimizing network performance and/or quality-of-service within the mobile communication network 100.
Especially, in the context of the present invention, the following steps of such a handover procedure are relevant in view to be optimized or enhance based on machine-learning principles:

Step 1 (Measurement control and reports): The source gNB configures the user equipment measurement procedures and the user equipment reports according to the measurement configuration;
Step 2 (Handover decision): The source gNB decides to handover the user equipment, based on MeasurementReport and RRM information.
Step 8 (Radio access network (RAN) handover completion): The user equipment synchronises to the target cell and completes the RRC (radio resource control) handover procedure by sending RRCReconfigurationComplete message to target gNB, i.e. the base station entity. In case of DAPS handover, the user equipment does not detach from the source cell upon receiving the RRCReconfiguration message. The user equipment releases the source resources and configurations and stops DL/UL reception and/or transmission with the source base station entity upon receiving an explicit release from the target node.

According to the present invention, it is proposed that the (radio) access network 110 and/or the core network 120 of the mobile communication network 100 comprise a plurality of network elements 200 and wherein furthermore the user equipments (20, 21) likewise comprise or are considered as network elements 200. Such network elements are schematically shown in Figure 1, encompassing both network elements of the (radio) access network 110, of the core network 112, as well as the user equipment 20.

According to the present invention, in order to provide communication services, a plurality of network elements 200 are required to interact with each other. In view of such interaction between a first network element 210 and a second network element 220, a machine-learning approach is used. The machine-learning (approach or method) generally comprises, or uses, policy data; furthermore, based on pieces of state information as well as based on the policy data, a machine-learning output is able to be computed that allows to derive one or a plurality of actions or action items.

The following example refers to the use of machine-learning method or approach of reinforcement learning. Reinforcement learning (or, RL) is an area of machine learning concerned with how (intelligent) agents ought to take actions in an environment in order to maximize the notion of cumulative reward. Reinforcement learning differs from supervised learning in not needing labelled input/output pairs to be presented, and in not needing sub-optimal actions to be explicitly corrected. Instead, the focus is on finding a balance between exploration (of uncharted territory) and exploitation (of current knowledge).

The basic process of reinforcement learning is able to be described by means of an Agent $\Pi$ that outputs actions $\bar{a}$ that are fed to an environment (of the agent $\Pi$), i.e. the 'world' of the agent, wherein the environment feeds information again to the agent $\Pi$, i.e. information related to the resulting state(s) after the application of the actions $\bar{a}$. This process is repeated and the environment feeds information to the agent in the form of pieces of state information (or state(s)) $\bar{s}$ as well as in the form of a reward: Based on whether the new state $\bar{s}$ (i.e. after the previously computed actions have been applied) is in line with the system objective(s), a reward $R$ is determined, which then indicates the agent how "good"/"bad" the (preceding) action has been.

An action $\bar{a}$ is executed (an 'action' $\bar{a}$ might be a single action such as, e.g., the change of a single precoder, or might also comprise multiple actions such as, e.g., a handover, setting for signal/power level, setting of user equipment configuration parameter such as energy saving level and/or frequency change - hence the vector notation). In the specific case of mobile networks, typically the network (i.e. a first network element such as a base station entity) instructing the user equipment 20 (i.e. a second network element) to perform a given action (or given actions). In the framework of reinforcement learning, the agent $\Pi$ outputs the action $\bar{a}$. The "reinforcement"

part is given by the feedback loop, i.e. in response to the action $\bar{a}$, the state of the system changes (from a previous state) to a state (or pieces of state information) $\bar{s}$.

In this sense, the present invention - and especially the inventive method - refers to the following concepts:

-- $\bar{a}$: action(s) to be performed;
-- $\bar{s}$: new state (or pieces of state information) after the application of action(s) $\bar{a}$;
-- $\Pi(\bar{s})$: function which returns the (optimum) action $\bar{a}$ based on the input (current) status $\bar{s}$, where

$$-- \Pi(\bar{s}) = \max_{\bar{a}} Q(\bar{s}, \bar{a})$$

, sometimes referred to as $Q^*$, i.e., the optimum action $\bar{a}$ based on the current state $\bar{s}$ is the one that outputs the highest reward $R$, where $Q(\bar{s}, \bar{a})$ returns the total reward given that:

-- the process is started in state $\bar{s}$,
-- take action $\bar{a}$ (once),
-- then behave optimally after that.

$R(\bar{s})$ is the reward associated with state $\bar{s}$, e.g. an arbitrary value of, e.g., 100 for achieving a spectrum efficiency close to the one theoretically achievable over a given distance, a lower arbitrary value of 50 for achieving a lower one and a further arbitrary value of 0 for achieving a low efficiency.

$Q(\bar{s}, \bar{a})$ is typically modelled as a Markov process. This is intuitively reflected by the fact that one moves from one state to another, i.e. $\bar{s} \rightarrow \bar{s}'$. As such, $Q(\bar{s}, \bar{a})$ can be characterized as

$$Q(\bar{s}, \bar{a}) = R(\bar{s}) + \gamma \max_{\bar{a}'} Q(\bar{s}', \bar{a}')$$

, with

-- $R(\bar{s})$ representing the reward one gets right away,
-- $\gamma$ a discount factor quantifying how much importance we give for future rewards, e.g. taking an intermediate step may greatly improve the possible reward in the next step, albeit at the cost of greatly diminishing the immediate reward,

$$-- \max_{\bar{a}'} Q(\bar{s}', \bar{a}')$$

representing the reward from behaving optimally starting from state $\bar{s}'$.

In conventionally known mobile communication networks, it is known that in order to support continuous state spaces (e.g., in a real-world application within a mobile communication network, for example regarding signal strength measurements), it is possible to train a neural network (e.g. one based on deep learning) to output $Q(\bar{s}, \bar{a})$. In the framework of artificial intelligence and/or machine-learning and training, one would consider the input vector of the neural network $\bar{x} = \bar{s}$ and the

output vector $\bar{y} = \begin{bmatrix} Q(\bar{s}, \overline{a_1}) \\ Q(\bar{s}, \overline{a_2}) \\ \vdots \\ Q(\bar{s}, \overline{a_n}) \end{bmatrix}$ . The neural network is trained, which results in an appropriate set of weights $W$. It is relevant for the proposed method that it can be both considered that such a neural network can be trained "offline", i.e. based on logged data; or "online", i.e. with current data as it appears on the system.

While the rewards $R$ is a design criterion, the relationships between $\bar{a}$ and $\bar{s}$ are intrinsic to the system, and reflect the characteristics one aims to predict.

According to the present invention it is proposed to add an indicator from either a (radio) access network node (AN node/RAN node) or a core network node (CN node) to indicate, or mandate, the user equipment 20 to feedback a state vector $\bar{s}$, i.e. pieces of state information, after a given procedure, such that $\Pi(\bar{s})$ can be calculated. According to the present invention, it is furthermore proposed to provide additional information towards the user equipment 20 to define $\bar{s}$, such that more flexible reinforcement learning algorithms can be applied, as well as to allow the (radio) access network node or core network node to associate and/or direct a received state $\bar{s}$ to a specific agent $\Pi$.

Hence, in order to overcome the lack of a feedback state that can be (re-)used to compute a reward, the 5GS (or the first network element 210) comprises an instruction, or an indication, towards its counterpart (i.e. the second network element 220, typically a user equipment 20) to report back status feedback. Applied to a handover procedure, the indication, in this case sent by the RAN (i.e. the first network element 210, being, e.g., radio access network entity or network node), instructs the user equipment, i.e. the second network element 220, to re-send measurements after the handover is completed (for example, the handover command, might also indicate, to the user equipment 20, to provide a status feedback, and the handover success message (sent from the user equipment 20) might comprise the status feedback).

The feedback indication especially considers the following indication:

-- the measurement control and report step as currently, which we term state $\bar{s}_0$
-- and the handover decision;
-- the handover command (command $\bar{a}$), which additionally indicates the UE to send feedback regarding the new state $\bar{s}$ after the procedure to the network;
-- the feedback of the new state $\bar{s}$ after the handover is completed.

The mentioned case involves the re-sending of the same measurements after a command is performed to drive reinforcement learning algorithms. Additionally, it is considered that the network can indicate additional or alternative measurement(s)/status information to be fed back. A considered use case being that of energy efficiency, where different metrics may be required compared to the current ones.

Additionally, the feedback indication might include when to send the feedback; in order to ensure a consistent training, it is necessary that the new status $\bar{s}$ is consistently fed back to the network (as solely a periodic feedback may not consistently reflect the immediate state after the action $\bar{a}$). This information being considered as a time delay or an absolute time (e.g. in some cases, such as when measuring throughput, the change is only meaningful if it is measured over time. However, consistent training should always consider a consistent amount of time as window among learning samples).

In this case, the network (i.e. the first network element 210) can request additional information from the user equipment (or the second network element 220), e.g. related to:

-- energy-related, such as energy consumption, efficiency, intensity, type, battery capacity;
-- throughput;
-- packet loss.

This provides the possibility that either:

-- the requested status vector is reported instead of the original one, e.g. a handover feedbacks energy-related metrics instead of the usual handover measurements;
-- the requested status vector is reported in addition to the original one, e.g. a handover feedbacks energy-related metrics additionally to the usual handover measurements.

Hence, according to the present invention, in order to enable the mobile communication network to provide enhanced communication services, the first and second network elements 210, 220 interact with each other, and a machine-learning approach is used. As has been said, the machine-learning (approach or method) generally comprises, or uses, policy data, and, furthermore, based on pieces of state information as well as based on the policy data, a machine-learning output is able to be computed that allows to derive one or a plurality of actions or action items. It has already been said that, in order to properly integrate reinforcement learning in a flexible manner into mobile networks, it necessary to ensure that the status vector $\bar{s}$ is fed back to the agent $\Pi$ after application of an action $\bar{a}$, such that the reinforcement loop can be implemented. However, a challenge is furthermore to:

-- enable an association between feedback data and a given (machine-learning) model,
-- allow for fully/partial flexible deployment of reinforcement learning models on the user equipment,
-- allow for privacy preservation of sensible information while still allowing the possibility to run such machine-learning models.

According to the present invention, the proposed method especially covers the following cases and/or provides the following advantages:

-- an existing status/measurement vector $\bar{s}$ can be reused,
-- new/specific status/measurements are required,
-- feedback of reward value $R$ to the user equipment,
-- transmission of model $\Pi$ (or, policy data) to the user equipment 20, transmission of partial status vector $\bar{s}'$ to the user equipment 20 and model inference in the user equipment 20, such that a solution is able to be provided for:

-- privacy preservation of certain state information from the user equipment is possible,
-- how the (transformed) state data - being sent by a user equipment 20 - can be associated to a specific model,
-- as well as using several models (policy data) simultaneously;

-- application to offline and online learning
-- application to energy savings.

Specifically, the inventive method comprises at least the following three steps that occur in the communication between the first and second network element 210, 220:

-- in a first step, the first network element 210 transmits, to the second network element 220, policy data 211 together with a policy data identifier information 219,
-- in a second step, the second network element 220 generates pieces of state information 222 and computes, based on the pieces of state information 222 as well as based on the policy data 211, a machine-learning output 223, wherein the second network element 220 furthermore transmits the machine-learning output 223 and the policy data identifier information 219 to the first network element 210,
-- in a third step, the first network element 210 generates or derives, based on the machine-learning output 223, one or a plurality of actions or action items 214, and transmits the one or the plurality of actions or action items 214 to the second network element 220.

Thus, it is thereby advantageously possible to use a machine-learning approach and nevertheless provide for an enhanced level of privacy by means of using, or applying privacy-keeping measures.

Figures 2 and 3 schematically and exemplarily illustrate examples of the situation of the first network element 210 (especially a network node of a mobile communication network, e.g. of the (radio) access network or of the core network) interacting with the second network element 220 (especially a user equipment) in a manner such that - despite machine-learning methods applied - it is nevertheless possible to provide for an enhanced level of privacy by means of using, or applying privacy-keeping measures.

Especially according to the present invention, it is proposed to use user equipment-based logic in order to provide for an enhanced level of privacy: By means of providing the user equipment 20 with policy data 211 (together with a policy data identifier information 219) and thereby providing the possibility, for the user equipment 20, to generate pieces of state information 222 and, especially and importantly, to compute, based on the pieces of state information 222 as well as based on the policy data 211, a machine-learning output 223, it is advantageously possible, according to the present invention, that the proposed method considers privacy issues arising with the transmission of a measurement and/or status data from one component to another one (e.g. from the user equipment 20 to the gNB or base station entity 111); it is, thus, possible to avoid to transmit personally-identifiable, subscriber-related information and/or precise location information, especially precise location information.

Especially according to the present invention, the policy data 211 correspond to pre-trained model data (or to a pre-trained model) such that the model output (or the machine-learning output 223 - calculated by the user equipment 20) is calculated at the user equipment 20 (or, the second network element 220). Optionally, it is also possible that the network sends state information (hereinafter also called further pieces of state information 212) to the user equipment 20, such that the model output/the machine-learning output 223 is able to be calculated at the user equipment 20.

This is shown in Figure 2 which depicts, by means of a communication diagram, the communication between the first network element 210 (especially a base station entity or gNB) and the second network element 220 (especially the user equipment 20):

In a first processing step 201, the first network element 210 transmits the policy data 211 together with the policy data identifier information 219 to the second network element 220 (Transfer $\Pi$, model ID). In a second (optional) processing step 202, the first network element 210 transmits a further pieces of state information 212 ($\bar{s}_1$) to the second network element 220.

In a third processing step 203, the second network element 220 generates the pieces of state information 222 and computes

-- based on the pieces of state information 222 as well as based on the policy data 211, or
-- based on the pieces of state information 222 as well as based on the further pieces of state information 212 and based on the policy data 211,

a machine-learning output 223 (compute $\Pi(\bar{s})$, where

$$\bar{s} = \begin{bmatrix} \bar{s_1} \\ \vdots \\ \bar{s_n} \end{bmatrix}).$$

In a fourth processing step 204, the second network element 220 transmits the machine-learning output 223 - as well as the policy data identifier information 219 - to the first network element 210 ($\Pi(\bar{s})$, model ID). In a fifth processing step 205, the first network element 210 generates or derives, based on the machine-learning output 223 (received from the second network element 220), one or a plurality of actions or action items 214 (network-based decision of $\bar{a}$ based on $\Pi(\bar{s})$), and - in a sixth processing step 206 - transmits the one or the plurality of actions or action items 214 to the second network element 220 ($\bar{a}$).

Subsequent to the sixth processing step 206, the second network element 220 especially generates second pieces of state information 225 based on the application of the one or the plurality of actions or action items 214, and - in a seventh processing step 207 - sends or transmits the second pieces of state information 225 to the first element 210 - especially together with, or including, the policy data identifier information 219.

It is thereby advantageously possible that, in a subsequent processing step (not shown in Figure 2), the first element 210 uses the second pieces of state information 225 to provide updated policy data 211, in an iterated or repeated first step, to the second network element 220, especially together with an updated policy data identifier information 219.

Hence, the model $\Pi$ is transmitted from the network (or first network element 210) to the user equipment 20 (or second network element 220); in order for the user equipment 20/220 to be able to identify the model, a model identifier is included, which is associated with the model. Instead of instructing the user equipment 20/220 to transmit the state (i.e. the pieces of state information 222 - possibly comprising or containing sensitive information) to the network 210, the network 210 transmits, if applicable, additional state information ($\bar{s_1}$ - further pieces of state information 212) to the user equipment 20/220 in the case the model requires network-provided information (it might be that the machine-learning model relies only on the user equipment-based state, hence this transmission is optional).

The network-originating state information ($\bar{s_1}$ - further pieces of state information 212) is able to be complemented by the user equipment 20/220 with state information available at the user equipment 20/220, such that $\bar{s}$ (i.e. the 'complete' state vector, comprising both the pieces of state information 222 as well as the further pieces of state information 212, $\bar{s_1}$) is generated.

For decision-making, the user equipment 20/220 reports the model output, i.e. the machine-learning output 223 $\Pi(\bar{s})$ to the network including the model ID (unless the receiving end (i.e. the first network element 210) can associate the received output to a specific model, it won't be capable of interpreting the output), wherein the network 210 transmits the resulting action $\bar{a}$.

It is thereby advantageously possible to provide extended network control.

According to another variant or embodiment of the present invention, Figure 3 represents a communication diagram showing the communication between the first network element 210 (especially a base station entity or gNB) and the second network element 220 (especially the user equipment 20) that implements a split-logic approach, where only certain information or pieces of information (e.g. not personally identifiable (i.e. non-sensitive or non-private) information) is/are sent (by the user equipment 20/220) to the network 210, while private (or sensitive) information is processed with the machine-learning model (i.e. using the policy data 211) on the user equipment 20/220.

Again, in a first processing step 231, the first network element 210 transmits the policy data 211 together with the policy data identifier information 219 to the second network element 220 (Transfer $\Pi'$, model ID); however, according to the alternative embodiment shown in Figure 3, only a partial model $\Pi'$ (instead of $\Pi$) that is fit for locally-available state(s) (i.e. the pieces of state information 222) is sent to the user equipment 20/220, and the user equipment 20/220 is then able to locally compute the model output ($\Pi'(\bar{s_2})$ - machine-learning output 223) based on information $\bar{s_2}$ locally available at the user equipment 20/220 (the pieces of state information 222), which is then sent to the network 210. Even though the model data (of the machine-learning model $\Pi$ or of the partial model $\Pi'$ transmitted to the user equipment 20/220 in the different embodiments shown in Figures 2 and 3) differ, both are designated by the term policy data 211. Hence, regarding the further processing steps represented in Figure 3, in a second processing step 232, the second network element 220 generates the pieces of state information 222 and computes, based on the pieces of state information 222 as well as based on the policy data 211, a machine-learning output 223 (compute $\Pi'(\bar{s_2})$).

In a third processing step 233, the second network element 220 transmits the machine-learning output 223 together with additional pieces of state information 222' $\bar{s_3}$ - as well as the policy data identifier information 219 - to the first network element 210 ($\Pi(\bar{s_2})$, $\bar{s_3}$, model ID).

In a fourth processing step 234, the first network element 210 generates or derives - based on the machine-learning output 223 (received from the second network element 220) as well as based on the model data (or policy data 211), and as well based on the additional pieces of state information 222' - a further machine-learning output 213' (calculate $\Pi$ based on $\bar{s}$, $\Pi(\bar{s_2})$, $\bar{s_3}$), and therefrom one or a plurality of actions or action items 214. In a fifth processing step 235 the first network element 210 transmits the one or the plurality of actions or action items 214 to the second network element 220 ($\bar{a}$). Subsequent to

the fifth processing step 235, the second network element 220 especially generates second pieces of state information 225 based on the application of the one or the plurality of actions or action items 214, and - in a sixth processing step 236 - sends or transmits the second pieces of state information 225 to the first element 210 - especially together with, or including, the policy data identifier information 219.

Again, it is thereby advantageously possible that, in a subsequent processing step (not shown in Figure 3), the first element 210 uses the second pieces of state information 225 to provide updated policy data 211, in an iterated or repeated first step, to the second network element 220, especially together with an updated policy data identifier information 219.

Hence, the approach shown in Figure 3 removes the need for disclosing the local state $\overline{s_2}$ (of or within the user equipment 20/220) to the network 210, instead disclosing only the corresponding machine-learning output 223 $\Pi$ $(\overline{s_2})$. The information sent to the network can also be combined with "raw" state information, depicted as $\overline{s_3}$ (additional pieces of state information 222'). The network 210 is, thus, able to combine the received results from different user equipments 20/220 with state (information) available on the network 210 side ($\overline{s_4}$ , ..., $\overline{s_n}$), i.e. $\overline{s}$ = $[\Pi'(\overline{s_2}), \overline{s_3}, \overline{s_4}, \cdots , \overline{s_n}]$ - and generate an action $\overline{a}$ (i.e. one or the plurality of actions or action items 214) based on the output $\Pi(\overline{s})$.

Furthermore, by including another model or policy identifier (i.e. a further policy data identifier information), it is possible to use multiple models in parallel (or simultaneously), such that it can be ensured that the data $\Pi(\overline{s})$ and the state data can always be associated to the correct model.

While the examples shown in Figures 2 and 3 depict and "online" parameter exchange, i.e. where the parameter learning is implied to be applied after $\overline{s}$ is received and linked to the action $\overline{a}$ and the previously sent state, it we also considered, according to the present invention, that training (as is common in artificial intelligence and/or machine-learning applications) is realized in an offline manner, such that the received parameters can be used at a later point to (re-)train the model $\Pi$.

Furthermore, for information resulting from the model application outside of its original location, it is considered to use a key (information) tied to the model (e.g. a model public key, with the private key not being transmitted); thereby, the information $\Pi'(\overline{s_2})$ being sent back to the network 210 or 5G system can be trusted as having originated from the model $\Pi'$ and not from another model.

While the examples depict an exchange between a user equipment 20 as the second network element 220 and a RAN/5GS network node (e.g. a base station entity or gNB) as the first network element 210, the same or an analogous method can be applied to the following network exchanges or exchanges between (different) first and second network element 210, 220, which can fit some of the measurement list previously detailed:

-- user equipment 20 and the core network or a core network element (e.g. a network function or service, NF), e.g. the user equipment 20 and the access and mobility management function AMF; examples thereof include, e.g., mobility steering, especially related to energy efficiency and cell/frequency allocation (e.g. based on power consumption over time), e.g. via the non-access stratum interface, N1 interface;

-- user equipment 20 and a further user equipment, e.g. via the PC5 interface;

-- (radio) access network elements (e.g. gNBs, CUs, DUs, RUs) within a (radio) access network 110, e.g. via the Uu interface;

-- network elements (e.g. network functions or services, NFs) within a core network 120, e.g. between SMF and UPF or SMF and PCF; examples thereof including, e.g. adjusting the quality-of-service, QoS, (applied policy by the PCF) on the SMF based on SMF policy reporting (e.g. PCRTs).

Hence, according to the present invention, the following embodiments and/or advantages are able to be realized:

-- a mobile communication network comprising a first element and a second element, wherein the first element indicates to the second element to feedback measurement(s) after a given action $\overline{a}$ is applied by the second element,

-- the transmission of a model $\Pi$ to the second element, wherein the second element uses (exclusively or non-exclusively) $\overline{s_2}$ available at the second element (for the case of a user equipment, this corresponds to the state information available at the user equipment);

-- the second element returns $\Pi(\overline{s})$ to the first element (this also includes, or corresponds to, the case when the user equipment sends a "partial" result based on "private" variables that it does not want to send to the network and the network aggregates the results), wherein $\overline{s}$ comprises $\overline{s_2}$;

-- the second element reporting of $\overline{s_0}$ (i.e. the initial training state) prior to the first element;

-- inclusion with $\Pi(\overline{s})$ of information related to the model $\Pi$, especially a model identifier and/or model signature/key related to the model (i.e. to support that more models are used simultaneously and to be able to map the received output to a specific model; this can also be used to assure that the output is actually from the corresponding model and not from a false (or fake) one);

-- the second element additionally returning the model information and/or applying the model signature/key to the returned data $\Pi(\overline{s})$;

-- the first element forwarding the received data $\Pi(\overline{s})$ to a model $\Pi$ based on the included model information (especially, the forwarding to information containing another identifier (ID 2) to another model, $\Pi_2$, to model $\Pi_2$);

-- the first and/or second element being a user equipment;

-- the first and/or second element being a gNB or (radio) access network element;

-- the first and/or second element being a core network element;

-- the indication to feedback measurements additionally comprising an indication when to send the feedback measurement, especially related to an absolute time or an amount of time;

-- the indication to feedback measurements additionally comprising an indication comprising information regarding what measurement the second element should include in $\overline{s}$;

-- $\overline{s}$ being feedback relating to any of the existing measurements in 3GPP;

-- the action $\overline{a}$ being related to a handover action, PCF action, mobility action;

-- $\overline{s}$ containing energy-related measurements/-states;

-- training of a model based on $\overline{s_0}, \overline{s}, \overline{a}$.

**Claims**

1. Method for providing communication services for modifying network behavior and/or for optimizing network performance and/or quality-of-service within a mobile communication network (100), wherein the mobile communication network (100) comprises, or is assigned to or associated with, an access network (110) and wherein the mobile communication network (100) comprises, or is assigned to or associated with, a core network (120), wherein furthermore a plurality of user equipments (20, 21) are connected, or able to be connected, to the mobile communication network (100),

wherein the access network (110) as well as the core network (120) comprise a plurality of network elements (200) and wherein furthermore the user equipments (20, 21) likewise comprise or are considered as network elements (200), wherein in order to provide communication services, a plurality of network elements (200) are required to interact with each other, and wherein, in view of such interaction between a first network element (210) and a second network element (220), a machine-learning approach is used, the machine-learning comprising, or using, policy data, wherein, based on pieces of state information as well as based on the policy data, a machine-learning output is able to be computed that allows to derive one or a plurality of actions or action items, **characterized in that** the method comprises the following steps:

-- in a first step, the first network element (210) transmits, to the second network element (220), policy data (211) together with a policy data identifier information (219),

-- in a second step, the second network element (220) generates pieces of state information (222) and computes, based on the pieces of state information (222) as well as based on the policy data (211), a machine-learning output (223), wherein the second network element (220) furthermore transmits the machine-learning output (223) and the policy data identifier information (219) to the first network element (210),

-- in a third step, the first network element (210) generates or derives, based on the machine-learning output (223), one or a plurality of actions or action items (214), and transmits the one or the plurality of actions or action items (214) to the second network element (220).

2. Method according to claim 1, wherein, the transmission of the policy data (211) and/or the transmission of the policy data identifier information (219) corresponds

-- to an initial transmission of the policy data (211) and/or the transmission of the policy data identifier information (219) and/or

-- to a transmission of an updated policy data (211) and/or the transmission of an updated policy data identifier information (219),

wherein especially, the transmission of an updated policy data (211) and/or the transmission of an updated policy data identifier information (219) occurs repeatedly, wherein especially the updated policy data (211) correspond to policy data (211) having been subjected to a re-training operation.

3. Method according to one of the preceding claims, wherein,

-- as part of the first step, the first network element (210) furthermore transmits, to the second network element (220), further pieces of state information (212), and wherein,

-- as part of the second step, the second network element (220) computes the machine-learning output (223) - besides based on the pieces of state information (222) and the policy data (211) - also based on the further pieces of state information (212).

4. Method according to one of the preceding claims, wherein

-- as part of the second step, besides the second network element (220) computing the machine-learning output (223) based on the pieces of state information (222) as well as based on the policy data (211), the second network element (220) generates additional pieces of state information (222') and transmits - besides the machine-learning output (223) and the policy data identifier information (219) - also the additional pieces of state information (222') to the first network element (210), and wherein,
-- as part of the third step, the first network element (210) computes, based on the additional pieces of state information (222') as well as based on the policy data (211) as well as on the machine-learning output (223) a further machine-learning output (213'), wherein first network element (210) furthermore generates or derives the one or the plurality of actions or action items (214) - besides based on the machine-learning output (223) - also based on the further machine-learning output (223').

5. Method according to one of the preceding claims, wherein the first and the second network elements correspond to one out of the following:

-- the first network element (210) corresponds to a network node or an entity or functionality of the access network (110), especially a radio access network, especially a base station entity, and the second network element (220) corresponds to a user equipment (20),
-- the first network element (210) corresponds to a network node or an entity or functionality of the core network (120), especially a network function or service such as an access and mobility management function, and the second network element (220) corresponds to a user equipment (20),
-- the first network element (210) corresponds to first user equipment (20), and the second network element (220) corresponds to a second user equipment (21),
-- the first network element (210) corresponds to a network node or an entity or functionality of the access network (110), especially a radio access network, especially a base station entity and/or a centralized unit and/or radio unit and/or a distributed unit, and the second network element (220) corresponds to a further network node or a further entity or functionality of the access network (110), especially a radio access network, especially a base station entity and/or a centralized unit and/or radio unit and/or a distributed unit,
-- the first network element (210) corresponds to a network node or an entity or functionality of the core network (120), especially a network function or service such as a session management function, and the second network element (220) corresponds to a further network node or a further entity or functionality of the core network (120), especially a network function or service such as a user plane function network data analytics function or a policy and charging function.

6. Method according to one of the preceding claims, wherein

-- in a fourth step, the second network element (220) generates second pieces of state information (225) based on the application of the one or the plurality of actions or action items (214),
-- in a fifth step, the second network element (220) sends the second pieces of state information (225) to the first element (210) including the policy data identifier information (219),
-- in a sixth step, the first element (210) uses the second pieces of state information (225) to provide updated policy data (211), in an iterated or repeated first step, to the second network element (220), especially together with an updated policy data identifier information (219),

wherein, especially, the first to fifth steps occur repeatedly such that the transmission of the updated policy data (211) and/or the transmission of the updated policy data identifier information (219) are repeated, wherein especially, the updated policy data (211) correspond to policy data (211) having been subjected to a re-training operation, wherein especially such re-training operation is based - in addition to the second pieces of state information (225) received from the second network element (220) - also on corresponding second pieces of state information received from further network elements being, or corresponding to, second network elements.

7. Method according to one of the preceding claims, wherein the policy data (211) is, refers, comprises or contains a machine-learning model, especially a machine-learning model based on reinforcement learning.

8. Method according to one of the preceding claims, wherein the policy data identifier information (219) includes a versioning information, wherein especially, by means of the versioning information, the policy data identifier information (219) is able to refer to a specific version of a plurality of versions of a machine-learning model, wherein especially the policy data identifier information and/or the versioning information is based on a hash identifier and/or on a timestamp.

9. System or mobile communication network (100) for providing communication services for modifying network behavior and/or for optimizing network performance and/or quality-of-service within a mobile communication network (100), wherein the mobile communication network (100) comprises, or is assigned to or associated with, an access network (110) and wherein the mobile communication network (100) comprises, or is assigned to or associated with, a core network (120), wherein furthermore a plurality of user equipments (20, 21) are connected, or able to be connected, to the mobile communication network (100),
wherein the access network (110) as well as the core network (120) comprise a plurality of network elements (200) and wherein furthermore the user equipments (20, 21) likewise comprise or are considered as network elements (200), wherein in order to provide communication services, a plurality of network elements (200) are required to interact with each other, and wherein, in view of such interaction between a first network element (210) and a second network element (220), a machine-learning approach is used, the machine-learning comprising, or using, policy data, wherein, based on pieces of state information as well as based on the policy data, a machine-learning output is able to be computed that allows to derive one or a plurality of actions or action items, **characterized in that** the system or mobile communication network (100) is configured such that :

-- the first network element (210) transmits, to the second network element (220), policy data (211) together with a policy data identifier information (219),
-- the second network element (220) generates pieces of state information (222) and computes, based on the pieces of state information (222) as well as based on the policy data (211), a machine-learning output (223), wherein the second network element (220) furthermore transmits the machine-learning output (223) and the policy data identifier information (219) to the first network element (210),
-- the first network element (210) generates or derives, based on the machine-learning output (223), one or a plurality of actions or action items (214), and transmits the one or the plurality of actions or action items (214) to the second network element (220).

10. User equipment (20) for being provided with communication services, wherein - for modifying network behavior and/or for optimizing network performance and/or quality-of-service within a mobile communication network (100) that comprises, or is assigned to or associated with, an access network (110) and a core network (120) - the user equipment (20), as a second network element (220), is configured to communicate with a first network element (210), especially a base station entity of the access network (110) and/or a network function or service of the core network (120), such that in order for the user equipment (20) to be provided with communication services, a machine-learning approach is used, the machine-learning comprising, or using, policy data, wherein, based on pieces of state information as well as based on the policy data, a machine-learning output is able to be computed that allows to derive one or a plurality of actions or action items, **characterized in that** the user equipment, as the second network element (220), is furthermore configured such that:

-- the second network element (220) receives policy data (211) together with a policy data identifier information (219),
-- the second network element (220) generates pieces of state information (222) and computes, based on the pieces of state information (222) as well as based on the policy data (211), a machine-learning output (223), wherein the second network element (220) furthermore transmits the machine-learning output (223) and the policy data identifier information (219) to the first network element (210),
-- the second network element (220) receives, from the first network element (210), one or a plurality of actions or action items (214), that is/are especially based on the machine-learning output (223).

11. Program comprising a computer readable program code, which, when executed on a computer and/or on a network node of a mobile communication network (100) and/or on a user equipment (20), or in part on a network node of a mobile communication network (100) and in part on a user equipment (20), causes the computer and/or the network node of the mobile communication network (100) and/or the user equipment (20) to perform a method according one of claims 1 to 8.

12. Computer-readable medium comprising instructions which, when executed on a computer and/or on a network node of a mobile communication network (100) and/or on a user equipment (20), or in part on a network node of a mobile communication network (100) and in part on a user equipment (20), causes the computer and/or the network node of the mobile communication network (100) and/or the user equipment (20) to perform a method according one of claims 1 to 8.

**Patentansprüche**

1. Verfahren zur Bereitstellung von Kommunikationsdiensten zur Modifizierung des Netzwerkverhaltens und/oder zur Optimierung der Netzwerkleistung und/oder Dienstgüte innerhalb eines Mobilfunknetzes (100), wobei das Mobilfunknetz (100) ein Zugangsnetz (110) umfasst oder diesem zugeordnet oder mit diesem verbunden ist und wobei das Mobilfunknetz (100) ein Kernnetz (120) umfasst oder diesem zugeordnet oder mit diesem verbunden ist, wobei ferner eine Vielzahl von Nutzergeräten (20, 21) mit dem Mobilfunknetz (100) verbunden sind oder verbunden werden können,

   wobei das Zugangsnetz (110) sowie das Kernnetz (120) eine Vielzahl von Netzelementen (200) umfassen und wobei ferner die Nutzergeräte (20, 21) ebenfalls Netzelemente (200) umfassen oder als solche betrachtet werden, wobei zur Bereitstellung von Kommunikationsdiensten eine Vielzahl von Netzelementen (200) miteinander interagieren müssen, und wobei im Hinblick auf eine solche Interaktion zwischen einem ersten Netzelement (210) und einem zweiten Netzelement (220) ein Ansatz des maschinellen Lernens verwendet wird, wobei das maschinelle Lernen Richtliniendaten umfasst oder verwendet, wobei basierend auf Zustandsinformationen sowie basierend auf den Richtliniendaten eine Ausgabe des maschinellen Lernens berechnet werden kann, die es ermöglicht, eine oder mehrere Aktionen oder Aktionselemente abzuleiten, **dadurch gekennzeichnet, dass** das Verfahren die folgenden Schritte umfasst:

   -- in einem ersten Schritt überträgt das erste Netzelement (210) an das zweite Netzelement (220) Richtliniendaten (211) zusammen mit einer Richtliniendaten-Kennungsinformation (219),
   -- in einem zweiten Schritt erzeugt das zweite Netzelement (220) Zustandsinformationen (222) und berechnet basierend auf den Zustandsinformationen (222) sowie basierend auf den Richtliniendaten (211) eine Ausgabe des maschinellen Lernens (223), wobei das zweite Netzelement (220) ferner die Ausgabe des maschinellen Lernens (223) und die Richtliniendaten-Kennungsinformation (219) an das erste Netzelement (210) überträgt,
   -- in einem dritten Schritt erzeugt oder leitet das erste Netzelement (210) basierend auf der Ausgabe des maschinellen Lernens (223) eine oder mehrere Aktionen oder Aktionselemente (214) ab und überträgt die eine oder die mehreren Aktionen oder Aktionselemente (214) an das zweite Netzelement (220).

2. Verfahren nach Anspruch 1, wobei die Übertragung der Richtliniendaten (211) und/oder die Übertragung der Richtliniendaten-Kennungsinformation (219) entspricht

   -- einer anfänglichen Übertragung der Richtliniendaten (211) und/oder der Übertragung der Richtliniendaten-Kennungsinformation (219) und/oder
   -- einer Übertragung von aktualisierten Richtliniendaten (211) und/oder der Übertragung einer aktualisierten Richtliniendaten-Kennungsinformation (219), wobei insbesondere die Übertragung von aktualisierten Richtliniendaten (211) und/oder die Übertragung einer aktualisierten Richtliniendaten-Kennungsinformation (219) wiederholt erfolgt, wobei insbesondere die aktualisierten Richtliniendaten (211) Richtliniendaten (211) entsprechen, die einem Nachtrainingsvorgang unterzogen wurden.

3. Verfahren nach einem der vorhergehenden Ansprüche, wobei

   -- als Teil des ersten Schritts das erste Netzelement (210) ferner an das zweite Netzelement (220) weitere Zustandsinformationen (212) überträgt, und wobei
   -- als Teil des zweiten Schritts das zweite Netzelement (220) die Ausgabe des maschinellen Lernens (223) -- neben basierend auf den Zustandsinformationen (222) und den Richtliniendaten (211) -- auch basierend auf den weiteren Zustandsinformationen (212) berechnet.

4. Verfahren nach einem der vorhergehenden Ansprüche, wobei

   -- als Teil des zweiten Schritts, neben der Berechnung der Ausgabe des maschinellen Lernens (223) durch das zweite Netzelement (220) basierend auf den Zustandsinformationen (222) sowie basierend auf den Richtliniendaten (211), das zweite Netzelement (220) zusätzliche Zustandsinformationen (222') erzeugt und neben der Ausgabe des maschinellen Lernens (223) und der Richtliniendaten-Kennungsinformation (219) -- auch die zusätzlichen Zustandsinformationen (222') an das erste Netzelement (210) überträgt, und wobei

-- als Teil des dritten Schritts das erste Netzelement (210) basierend auf den zusätzlichen Zustandsinformationen (222') sowie basierend auf den Richtliniendaten (211) sowie auf der Ausgabe des maschinellen Lernens (223) eine weitere Ausgabe des maschinellen Lernens (213') berechnet, wobei das erste Netzelement (210) ferner die eine oder die mehreren Aktionen oder Aktionselemente (214) **--** neben basierend auf der Ausgabe des maschinellen Lernens (223) **--** auch basierend auf der weiteren Ausgabe des maschinellen Lernens (223') erzeugt oder ableitet.

5. Verfahren nach einem der vorhergehenden Ansprüche, wobei das erste und das zweite Netzelement einem der folgenden entsprechen:

-- das erste Netzelement (210) entspricht einem Netzwerkknoten oder einer Entität oder Funktionalität des Zugangsnetzes (110), insbesondere einem Funkzugangsnetz, insbesondere einer Basisstationsentität, und das zweite Netzelement (220) entspricht einem Nutzergerät (20),

-- das erste Netzelement (210) entspricht einem Netzwerkknoten oder einer Entität oder Funktionalität des Kernnetzes (120), insbesondere einer Netzwerkfunktion oder einem Dienst wie einer Zugangs- und Mobilitätsverwaltungsfunktion, und das zweite Netzelement (220) entspricht einem Nutzergerät (20),

-- das erste Netzelement (210) entspricht einem ersten Nutzergerät (20), und das zweite Netzelement (220) entspricht einem zweiten Nutzergerät (21),

**--** das erste Netzelement (210) entspricht einem Netzwerkknoten oder einer Entität oder Funktionalität des Zugangsnetzes (110), insbesondere einem Funkzugangsnetz, insbesondere einer Basisstationsentität und/oder einer zentralisierten Einheit und/oder Funkeinheit und/oder einer verteilten Einheit, und das zweite Netzelement (220) entspricht einem weiteren Netzwerkknoten oder einer weiteren Entität oder Funktionalität des Zugangsnetzes (110), insbesondere einem Funkzugangsnetz, insbesondere einer Basisstationsentität und/oder einer zentralisierten Einheit und/oder Funkeinheit und/oder einer verteilten Einheit,

-- das erste Netzelement (210) entspricht einem Netzwerkknoten oder einer Entität oder Funktionalität des Kernnetzes (120), insbesondere einer Netzwerkfunktion oder einem Dienst wie einer Sitzungsverwaltungsfunktion, und das zweite Netzelement (220) entspricht einem weiteren Netzwerkknoten oder einer weiteren Entität oder Funktionalität des Kernnetzes (120), insbesondere einer Netzwerkfunktion oder einem Dienst wie einer Nutzerebenen-Funktion, Netzwerkdatenanalysefunktion oder einer Richtlinien- und Abrechnungsfunktion.

6. Verfahren nach einem der vorhergehenden Ansprüche, wobei

-- in einem vierten Schritt das zweite Netzelement (220) zweite Zustandsinformationen (225) basierend auf der Anwendung der einen oder der mehreren Aktionen oder Aktionselemente (214) erzeugt,

-- in einem fünften Schritt das zweite Netzelement (220) die zweiten Zustandsinformationen (225) an das erste Element (210) einschließlich der Richtliniendaten-Kennungsinformation (219) sendet,

-- in einem sechsten Schritt das erste Element (210) die zweiten Zustandsinformationen (225) verwendet, um aktualisierte Richtliniendaten (211) in einem iterierten oder wiederholten ersten Schritt an das zweite Netzelement (220) bereitzustellen, insbesondere zusammen mit einer aktualisierten Richtliniendaten-Kennungsinformation (219),

wobei insbesondere der erste bis fünfte Schritt wiederholt erfolgen, so dass die Übertragung der aktualisierten Richtliniendaten (211) und/oder die Übertragung der aktualisierten Richtliniendaten-Kennungsinformation (219) wiederholt werden, wobei insbesondere die aktualisierten Richtliniendaten (211) Richtliniendaten (211) entsprechen, die einem Nachtrainingsvorgang unterzogen wurden, wobei insbesondere ein solcher Nachtrainingsvorgang basiert **--** zusätzlich zu den zweiten Zustandsinformationen (225), die vom zweiten Netzelement (220) empfangen wurden

-- auch auf entsprechenden zweiten Zustandsinformationen, die von weiteren Netzelementen empfangen wurden, die zweite Netzelemente sind oder solchen entsprechen.

7. Verfahren nach einem der vorhergehenden Ansprüche, wobei die Richtliniendaten (211) ein Modell des maschinellen Lernens sind, sich darauf beziehen, dieses umfassen oder enthalten, insbesondere ein Modell des maschinellen Lernens, das auf bestärkendem Lernen basiert.

8. Verfahren nach einem der vorhergehenden Ansprüche, wobei die Richtliniendaten-Kennungsinformation (219) eine Versionsinformation enthält, wobei insbesondere mittels der Versionsinformation die Richtliniendaten-Kennungsinformation (219) sich auf eine bestimmte Version einer Vielzahl von Versionen eines Modells des maschinellen Lernens beziehen kann, wobei insbesondere die Richtliniendaten-Kennungsinformation und/oder die Versionsinformation auf einer Hash-Kennung und/oder auf einem Zeitstempel basiert.

9. System oder Mobilfunknetz (100) zur Bereitstellung von Kommunikationsdiensten zur Modifizierung des Netzwerkverhaltens und/oder zur Optimierung der Netzwerkleistung und/oder Dienstgüte innerhalb eines Mobilfunknetzes (100), wobei das Mobilfunknetz (100) ein Zugangsnetz (110) umfasst oder diesem zugeordnet oder mit diesem verbunden ist und wobei das Mobilfunknetz (100) ein Kernnetz (120) umfasst oder diesem zugeordnet oder mit diesem verbunden ist, wobei ferner eine Vielzahl von Nutzergeräten (20, 21) mit dem Mobilfunknetz (100) verbunden sind oder verbunden werden können,

wobei das Zugangsnetz (110) sowie das Kernnetz (120) eine Vielzahl von Netzelementen (200) umfassen und wobei ferner die Nutzergeräte (20, 21) ebenfalls Netzelemente (200) umfassen oder als solche betrachtet werden, wobei zur Bereitstellung von Kommunikationsdiensten eine Vielzahl von Netzelementen (200) miteinander interagieren müssen, und wobei im Hinblick auf eine solche Interaktion zwischen einem ersten Netzelement (210) und einem zweiten Netzelement (220) ein Ansatz des maschinellen Lernens verwendet wird, wobei das maschinelle Lernen Richtliniendaten umfasst oder verwendet, wobei basierend auf Zustandsinformationen sowie basierend auf den Richtliniendaten eine Ausgabe des maschinellen Lernens berechnet werden kann, die es ermöglicht, eine oder mehrere Aktionen oder Aktionselemente abzuleiten, **dadurch gekennzeichnet, dass** das System oder Mobilfunknetz (100) so konfiguriert ist, dass:

-- das erste Netzelement (210) an das zweite Netzelement (220) Richtliniendaten (211) zusammen mit einer Richtliniendaten-Kennungsinformation (219) überträgt,
-- das zweite Netzelement (220) Zustandsinformationen (222) erzeugt und basierend auf den Zustandsinformationen (222) sowie basierend auf den Richtliniendaten (211) eine Ausgabe des maschinellen Lernens (223) berechnet, wobei das zweite Netzelement (220) ferner die Ausgabe des maschinellen Lernens (223) und die Richtliniendaten-Kennungsinformation (219) an das erste Netzelement (210) überträgt,

-- das erste Netzelement (210) basierend auf der Ausgabe des maschinellen Lernens (223) eine oder mehrere Aktionen oder Aktionselemente (214) erzeugt oder ableitet und die eine oder die mehreren Aktionen oder Aktionselemente (214) an das zweite Netzelement (220) überträgt.

10. Nutzergerät (20) zur Bereitstellung von Kommunikationsdiensten, wobei -- zur Modifizierung des Netzwerkverhaltens und/oder zur Optimierung der Netzwerkleistung und/oder Dienstgüte innerhalb eines Mobilfunknetzes (100), das ein Zugangsnetz (110) und ein Kernnetz (120) umfasst oder diesen zugeordnet oder mit diesen verbunden ist -- das Nutzergerät (20) als zweites Netzelement (220) konfiguriert ist, mit einem ersten Netzelement (210), insbesondere einer Basisstationsentität des Zugangsnetzes (110) und/oder einer Netzwerkfunktion oder einem Dienst des Kernnetzes (120), zu kommunizieren, so dass zur Bereitstellung von Kommunikationsdiensten für das Nutzergerät (20) ein Ansatz des maschinellen Lernens verwendet wird, wobei das maschinelle Lernen Richtliniendaten umfasst oder verwendet, wobei basierend auf Zustandsinformationen sowie basierend auf den Richtliniendaten eine Ausgabe des maschinellen Lernens berechnet werden kann, die es ermöglicht, eine oder mehrere Aktionen oder Aktionselemente abzuleiten, **dadurch gekennzeichnet, dass** das Nutzergerät als zweites Netzelement (220) ferner so konfiguriert ist, dass:

-- das zweite Netzelement (220) Richtliniendaten (211) zusammen mit einer Richtliniendaten-Kennungsinformation (219) empfängt,
-- das zweite Netzelement (220) Zustandsinformationen (222) erzeugt und basierend auf den Zustandsinformationen (222) sowie basierend auf den Richtliniendaten (211) eine Ausgabe des maschinellen Lernens (223) berechnet, wobei das zweite Netzelement (220) ferner die Ausgabe des maschinellen Lernens (223) und die Richtliniendaten-Kennungsinformation (219) an das erste Netzelement (210) überträgt,
-- das zweite Netzelement (220) vom ersten Netzelement (210) eine oder mehrere Aktionen oder Aktionselemente (214) empfängt, die insbesondere auf der Ausgabe des maschinellen Lernens (223) basieren.

11. Programm, das einen computerlesbaren Programmcode umfasst, der, wenn er auf einem Computer und/oder auf einem Netzwerkknoten eines Mobilfunknetzes (100) und/oder auf einem Nutzergerät (20) oder teilweise auf einem Netzwerkknoten eines Mobilfunknetzes (100) und teilweise auf einem Nutzergerät (20) ausgeführt wird, den Computer und/oder den Netzwerkknoten des Mobilfunknetzes (100) und/oder das Nutzergerät (20) veranlasst, ein Verfahren nach einem der Ansprüche 1 bis 8 auszuführen.

**12.** Computerlesbares Medium, das Anweisungen umfasst, die, wenn sie auf einem Computer und/oder auf einem Netzwerkknoten eines Mobilfunknetzes (100) und/oder auf einem Nutzergerät (20) oder teilweise auf einem Netzwerkknoten eines Mobilfunknetzes (100) und teilweise auf einem Nutzergerät (20) ausgeführt werden, den Computer und/oder den Netzwerkknoten des Mobilfunknetzes (100) und/oder das Nutzergerät (20) veranlassen, ein Verfahren nach einem der Ansprüche 1 bis 8 auszuführen.

**Revendications**

**1.** Procédé de fourniture de services de communication pour modifier le comportement du réseau et/ou pour optimiser la performance du réseau et/ou la qualité de service au sein d'un réseau de communication mobile (100), dans lequel le réseau de communication mobile (100) comprend, ou est attribué à ou associé à, un réseau d'accès (110) et dans lequel le réseau de communication mobile (100) comprend, ou est attribué à ou associé à, un réseau cœur (120), dans lequel en outre une pluralité d'équipements utilisateurs (20, 21) sont connectés, ou peuvent être connectés, au réseau de communication mobile (100),

dans lequel le réseau d'accès (110) ainsi que le réseau cœur (120) comprennent une pluralité d'éléments de réseau (200) et dans lequel en outre les équipements utilisateurs (20, 21) comprennent également ou sont considérés comme des éléments de réseau (200),

dans lequel afin de fournir des services de communication, une pluralité d'éléments de réseau (200) sont requis pour interagir les uns avec les autres, et dans lequel, en vue d'une telle interaction entre un premier élément de réseau (210) et un deuxième élément de réseau (220), une approche d'apprentissage automatique est utilisée, l'apprentissage automatique comprenant, ou utilisant, des données de politique, dans lequel, sur la base d'informations d'état ainsi que sur la base des données de politique, une sortie d'apprentissage automatique peut être calculée qui permet de dériver une ou plusieurs actions ou éléments d'action, **caractérisé en ce que** le procédé comprend les étapes suivantes :

-- dans une première étape, le premier élément de réseau (210) transmet, au deuxième élément de réseau (220), des données de politique (211) conjointement avec une information d'identification des données de politique (219),

-- dans une deuxième étape, le deuxième élément de réseau (220) génère des informations d'état (222) et calcule, sur la base des informations d'état (222) ainsi que sur la base des données de politique (211), une sortie d'apprentissage automatique (223), dans lequel le deuxième élément de réseau (220) transmet en outre la sortie d'apprentissage automatique (223) et l'information d'identification des données de politique (219) au premier élément de réseau (210),

-- dans une troisième étape, le premier élément de réseau (210) génère ou dérive, sur la base de la sortie d'apprentissage automatique (223), un ou plusieurs actions ou éléments d'action (214), et transmet le ou les actions ou éléments d'action (214) au deuxième élément de réseau (220).

**2.** Procédé selon la revendication 1, dans lequel la transmission des données de politique (211) et/ou la transmission de l'information d'identification des données de politique (219) correspond

-- à une transmission initiale des données de politique (211) et/ou la transmission de l'information d'identification des données de politique (219) et/ou
-- à une transmission de données de politique (211) mises à jour et/ou la transmission d'une information d'identification des données de politique (219) mise à jour,

dans lequel en particulier, la transmission de données de politique (211) mises à jour et/ou la transmission d'une information d'identification des données de politique (219) mise à jour se produit de manière répétée, dans lequel en particulier les données de politique (211) mises à jour correspondent à des données de politique (211) ayant été soumises à une opération de ré-entraînement.

**3.** Procédé selon l'une des revendications précédentes, dans lequel

-- dans le cadre de la première étape, le premier élément de réseau (210) transmet en outre, au deuxième élément de réseau (220), d'autres informations d'état (212), et dans lequel
-- dans le cadre de la deuxième étape, le deuxième élément de réseau (220) calcule la sortie d'apprentissage automatique (223) **--** en plus de se baser sur les informations d'état (222) et les données de politique (211) **--** également sur la base des autres informations d'état (212).

4.  Procédé selon l'une des revendications précédentes, dans lequel

    -- dans le cadre de la deuxième étape, en plus du deuxième élément de réseau (220) calculant la sortie d'apprentissage automatique (223) sur la base des informations d'état (222) ainsi que sur la base des données de politique (211), le deuxième élément de réseau (220) génère des informations d'état (222') supplémentaires et transmet -- en plus de la sortie d'apprentissage automatique (223) et de l'information d'identification des données de politique (219) -- également les informations d'état (222') supplémentaires au premier élément de réseau (210), et dans lequel

    -- dans le cadre de la troisième étape, le premier élément de réseau (210) calcule, sur la base des informations d'état (222') supplémentaires ainsi que sur la base des données de politique (211) ainsi que sur la sortie d'apprentissage automatique (223) une sortie d'apprentissage automatique (213') supplémentaire, dans lequel le premier élément de réseau (210) génère ou dérive en outre le ou les actions ou éléments d'action (214) -- en plus de se baser sur la sortie d'apprentissage automatique (223)-- également sur la base de la sortie d'apprentissage automatique (223') supplémentaire.

5.  Procédé selon l'une des revendications précédentes, dans lequel le premier et le deuxième éléments de réseau correspondent à l'un des suivants :

    -- le premier élément de réseau (210) correspond à un nœud de réseau ou à une entité ou fonctionnalité du réseau d'accès (110), en particulier un réseau d'accès radio, en particulier une entité de station de base, et le deuxième élément de réseau (220) correspond à un équipement utilisateur (20),

    -- le premier élément de réseau (210) correspond à un nœud de réseau ou à une entité ou fonctionnalité du réseau cœur (120), en particulier une fonction réseau ou un service tel qu'une fonction de gestion d'accès et de mobilité, et le deuxième élément de réseau (220) correspond à un équipement utilisateur (20),

    -- le premier élément de réseau (210) correspond à un premier équipement utilisateur (20), et le deuxième élément de réseau (220) correspond à un deuxième équipement utilisateur (21),

    -- le premier élément de réseau (210) correspond à un nœud de réseau ou à une entité ou fonctionnalité du réseau d'accès (110), en particulier un réseau d'accès radio, en particulier une entité de station de base et/ou une unité centralisée et/ou unité radio et/ou une unité distribuée, et le deuxième élément de réseau (220) correspond à un autre nœud de réseau ou à une autre entité ou fonctionnalité du réseau d'accès (110), en particulier un réseau d'accès radio, en particulier une entité de station de base et/ou une unité centralisée et/ou unité radio et/ou une unité distribuée,

    -- le premier élément de réseau (210) correspond à un nœud de réseau ou à une entité ou fonctionnalité du réseau cœur (120), en particulier une fonction réseau ou un service tel qu'une fonction de gestion de session, et le deuxième élément de réseau (220) correspond à un autre nœud de réseau ou à une autre entité ou fonctionnalité du réseau cœur (120), en particulier une fonction réseau ou un service tel qu'une fonction de plan utilisateur, fonction d'analyse de données réseau ou une fonction de politique et de taxation.

6.  Procédé selon l'une des revendications précédentes, dans lequel

    -- dans une quatrième étape, le deuxième élément de réseau (220) génère des deuxièmes informations d'état (225) sur la base de l'application du ou des actions ou éléments d'action (214),

    -- dans une cinquième étape, le deuxième élément de réseau (220) envoie les deuxièmes informations d'état (225) au premier élément (210) incluant l'information d'identification des données de politique (219),

    -- dans une sixième étape, le premier élément (210) utilise les deuxièmes informations d'état (225) pour fournir des données de politique (211) mises à jour, dans une première étape itérée ou répétée, au deuxième élément de réseau (220), en particulier conjointement avec une information d'identification des données de politique (219) mise à jour,

dans lequel, en particulier, les première à cinquième étapes se produisent de manière répétée de sorte que la transmission des données de politique (211) mises à jour et/ou la transmission de l'information d'identification des données de politique (219) mise à jour sont répétées, dans lequel en particulier, les données de politique (211) mises à jour correspondent à des données de politique (211) ayant été soumises à une opération de ré-entraînement, dans lequel en particulier une telle opération de ré-entraînement est basée -- en plus des deuxièmes informations d'état (225) reçues du deuxième élément de réseau (220) -- également sur des deuxièmes informations d'état correspondantes reçues d'autres éléments de réseau étant, ou correspondant à, des deuxièmes éléments de réseau.

7. Procédé selon l'une des revendications précédentes, dans lequel les données de politique (211) sont, se réfèrent à, comprennent ou contiennent un modèle d'apprentissage automatique, en particulier un modèle d'apprentissage automatique basé sur l'apprentissage par renforcement.

8. Procédé selon l'une des revendications précédentes, dans lequel l'information d'identification des données de politique (219) inclut une information de version, dans lequel en particulier, au moyen de l'information de version, l'information d'identification des données de politique (219) peut se référer à une version spécifique d'une pluralité de versions d'un modèle d'apprentissage automatique, dans lequel en particulier l'information d'identification des données de politique et/ou l'information de version est basée sur un identifiant de hachage et/ou sur un horodatage.

9. Système ou réseau de communication mobile (100) pour fournir des services de communication pour modifier le comportement du réseau et/ou pour optimiser la performance du réseau et/ou la qualité de service au sein d'un réseau de communication mobile (100), dans lequel le réseau de communication mobile (100) comprend, ou est attribué à ou associé à, un réseau d'accès (110) et dans lequel le réseau de communication mobile (100) comprend, ou est attribué à ou associé à, un réseau cœur (120), dans lequel en outre une pluralité d'équipements utilisateurs (20, 21) sont connectés, ou peuvent être connectés, au réseau de communication mobile (100),

dans lequel le réseau d'accès (110) ainsi que le réseau cœur (120) comprennent une pluralité d'éléments de réseau (200) et dans lequel en outre les équipements utilisateurs (20, 21) comprennent également ou sont considérés comme des éléments de réseau (200), dans lequel afin de fournir des services de communication, une pluralité d'éléments de réseau (200) sont requis pour interagir les uns avec les autres, et dans lequel, en vue d'une telle interaction entre un premier élément de réseau (210) et un deuxième élément de réseau (220), une approche d'apprentissage automatique est utilisée, l'apprentissage automatique comprenant, ou utilisant, des données de politique, dans lequel, sur la base d'informations d'état ainsi que sur la base des données de politique, une sortie d'apprentissage automatique peut être calculée qui permet de dériver une ou plusieurs actions ou éléments d'action, **caractérisé en ce que** le système ou réseau de communication mobile (100) est configuré de telle sorte que :

-- le premier élément de réseau (210) transmet, au deuxième élément de réseau (220), des données de politique (211) conjointement avec une information d'identification des données de politique (219),
-- le deuxième élément de réseau (220) génère des informations d'état (222) et calcule, sur la base des informations d'état (222) ainsi que sur la base des données de politique (211), une sortie d'apprentissage automatique (223), dans lequel le deuxième élément de réseau (220) transmet en outre la sortie d'apprentissage automatique (223) et l'information d'identification des données de politique (219) au premier élément de réseau (210),
-- le premier élément de réseau (210) génère ou dérive, sur la base de la sortie d'apprentissage automatique (223), un ou plusieurs actions ou éléments d'action (214), et transmet le ou les actions ou éléments d'action (214) au deuxième élément de réseau (220).

10. Équipement utilisateur (20) pour être fourni avec des services de communication, dans lequel -- pour modifier le comportement du réseau et/ou pour optimiser la performance du réseau et/ou la qualité de service au sein d'un réseau de communication mobile (100) qui comprend, ou est attribué à ou associé à, un réseau d'accès (110) et un réseau cœur (120) -- l'équipement utilisateur (20), en tant que deuxième élément de réseau (220), est configuré pour communiquer avec un premier élément de réseau (210), en particulier une entité de station de base du réseau d'accès (110) et/ou une fonction réseau ou un service du réseau cœur (120), de sorte qu'afin que l'équipement utilisateur (20) soit fourni avec des services de communication, une approche d'apprentissage automatique est utilisée, l'apprentissage automatique comprenant, ou utilisant, des données de politique, dans lequel, sur la base d'informations d'état ainsi que sur la base des données de politique, une sortie d'apprentissage automatique peut être calculée qui permet de dériver une ou plusieurs actions ou éléments d'action, **caractérisé en ce que** l'équipement utilisateur, en tant que deuxième élément de réseau (220), est en outre configuré de telle sorte que :

-- le deuxième élément de réseau (220) reçoit des données de politique (211) conjointement avec une information d'identification des données de politique (219),

-- le deuxième élément de réseau (220) génère des informations d'état (222) et calcule, sur la base des informations d'état (222) ainsi que sur la base des données de politique (211), une sortie d'apprentissage automatique (223), dans lequel le deuxième élément de réseau (220) transmet en outre la sortie d'apprentissage automatique (223) et l'information d'identification des données de politique (219) au premier élément de réseau (210),

-- le deuxième élément de réseau (220) reçoit, du premier élément de réseau (210), un ou plusieurs actions ou éléments d'action (214), qui est/sont en particulier basé(s) sur la sortie d'apprentissage automatique (223).

11. Programme comprenant un code de programme lisible par ordinateur, qui, lorsqu'il est exécuté sur un ordinateur et/ou sur un nœud de réseau d'un réseau de communication mobile (100) et/ou sur un équipement utilisateur (20), ou en partie sur un nœud de réseau d'un réseau de communication mobile (100) et en partie sur un équipement utilisateur (20), amène l'ordinateur et/ou le nœud de réseau du réseau de communication mobile (100) et/ou l'équipement utilisateur (20) à exécuter un procédé selon l'une des revendications 1 à 8.

12. Support lisible par ordinateur comprenant des instructions qui, lorsqu'elles sont exécutées sur un ordinateur et/ou sur un nœud de réseau d'un réseau de communication mobile (100) et/ou sur un équipement utilisateur (20), ou en partie sur un nœud de réseau d'un réseau de communication mobile (100) et en partie sur un équipement utilisateur (20), amènent l'ordinateur et/ou le nœud de réseau du réseau de communication mobile (100) et/ou l'équipement utilisateur (20) à exécuter un procédé selon l'une des revendications 1 à 8.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023209577 A1
- WO 2023148010 A1
- WO 2023086937 A1